# EUROPÄISCHE PATENTSCHRIFT

(11) **EP 0 681 170 B1**
(45) Veröffentlichungstag und Bekanntmachung des Hinweises auf die Patenterteilung: **15.01.1997**
(21) Anmeldenummer: 95106735.4
(22) Anmeldetag: 04.05.1995
(51) Int. Cl.: G01M 1/32

(54) **Verfahren und Vorrichtung zum Ausgleich einer Unwucht an einem Kraftfahrzeugrad**
Method and device for compensating an imbalance of a vehicle wheel
Méthode et dispositif pour compenser un déséquilibre d'une roue de véhicule

(30) Priorität: 05.05.1994 DE 4415931
(43) Veröffentlichungstag der Anmeldung: 08.11.1995
(73) Patentinhaber: HOFMANN WERKSTATT-TECHNIK GMBH, D-64319 Pfungstadt (DE)
(72) Erfinder: Rothamel, Karl, D-64342 Seeheim (DE); Diez, Ulrich, D-51580 Reichshof (DE); Humber, Kurt, D-64347 Griesheim (DE)
(74) Vertreter: Nöth, Heinz, Dipl.-Phys.

(56) Entgegenhaltungen:
- EP-A- 0 417 414
- EP-A- 0 454 393
- DE-A- 2 019 649
- DE-A- 2 522 149
- US-A- 4 759 217
- US-A- 4 854 168
- US-A- 4 926 341
- US-A- 5 355 729
- PATENT ABSTRACTS OF JAPAN vol. 18 no. 64 (P-1685) ,2.Februar 1994 & JP-A-05 281076 (KOKUSAI KEISOKKI KK) 29.Oktober 1993,

## Beschreibung

Die Erfindung betrifft ein Verfahren nach dem Oberbegriff des Patentanspruches 1 und eine Vorrichtung nach dem Oberbegriff des Patentanspruches 5, wie sie aus der DE 42 29 865 A oder dem Firmenprospekt "geodyna 3000/3500 der Hofmann Werkstatt-Technik GmbH, 64319 Pfungstadt, Impressum 9402195 03.94", bekannt sind.

Bei Scheibenrädern, welche keine Felgenhörner zum Befestigen von Unwuchtausgleichsgewichten aufweisen, werden selbstklebende Ausgleichsgewichte, welche in bestimmten Größen in Form von Bändern bzw. Riegeln in vorbestimmten Gewichtsstufen in Bereitschaft gehalten werden, an der Innenseite des Scheibenrades an solchen Stellen zu befestigen, an denen sie aufgrund von Fliehkraft während des Fahrens angedrückt werden. Hierdurch wird ferner gewährleistet, daß das äußere Erscheinungsbild der Radscheibe durch das Ausgleichsgewicht nicht beeinträchtigt wird. Aus der DE 42 29 865 A1 ist es hierzu bekannt, die Ausgleichsebenen und Radien, in denen Ausgleichsgewichte für den Unwuchtausgleich insbesondere an der Scheibenradinnenseite für den Unwuchtausgleich positioniert werden können, abzutasten und mit Hilfe der Abtasteinrichtung nach Durchführung des Meßvorgangs die Ausgleichslagen, welche auch an verdeckten Stellen liegen können, wiederaufzufinden.

Aus der JP 59-72036 A in Patents Abstracts of Japan P-295, 17.8.84, Vol 8/No. 179 ist es bekannt, bei Rotoren, die einen Unwuchtausgleich nur innerhalb bestimmter Ausgleichsstellen erlauben, den ermittelten Unwuchtvektor in zwei Komponenten zu zerlegen, die innerhalb der erlaubten Ausgleichsstellen liegen. Auch aus der DE 28 30 070 A1 ist es bekannt, den in einem Meßvorgang ermittelten Unwuchtvektor in Komponenten zu zerlegen.

Im Gegensatz dazu sind bei Kraftfahrzeugrädern die Scheibenräder, insbesondere an ihrer Innenseite, derart ausgebildet, daß in allen Winkelpositionen Ausgleichsgewichte, insbesondere Klebegewichte, befestigt werden können. Bei der aus dem eingangs genannten Prospekt "geodyna 3000/3500" bekannten Meßeinrichtung sind unendlich viele Möglichkeiten der Gewichteplazierung erlaubt.

Für den Unwuchtausgleich ist es aus der DE 37 43 302 A1 bekannt, die Ausgleichsmassen in Form einer Ausgleichsmassenreihe in Bereitschaft zu halten. Ferner ist es aus der DE-OS 20 19 649 bekannt, die Ausgleichsmassen in Form eines durchgehenden zu einer Rolle aufgewickelten Gewichtebandes in Bereitschaft zu halten und die erforderlichen Gewichtsgrößen vom Gewichteband abzulängen.

Aufgabe der Erfindung ist es, ein Verfahren und eine Vorrichtung der eingangs genannten Art zu schaffen, mit denen der Unwuchtausgleich an geschützten Stellen des Kraftfahrzeugrades erreicht wird.

Diese Aufgabe wird beim Verfahren erfindungsgemäß durch die kennzeichnenden Merkmale des Patentanspruches 1 und bei der Vorrichtung durch die kennzeichnenden Merkmale des Patentanspruches 5 gelöst.

Die für die Ausgleichskomponenten ermittelten Ausgleichsgewichte können in Form von Bändern (Riegeln) in gestuften Gewichtsgrößen in Bereitschaft gehalten werden. Um eine hohe Auswuchtqualität, d.h. minimierte Restunwuchten zu erhalten, werden die Gewichtsstufen ebenfalls gespeichert und bei der Bestimmung der Ausgleichskomponenten an den Stellen der radial durchgehenden Radscheibenteile (Radscheibenstege bzw. -speichen) berücksichtigt.

In bevorzugter Weise werden die Ausgleichsgewichte in Form eines durchgehenden Bandes, das zu einer Rolle aufgewickelt sein kann, in Bereitschaft gehalten. Von diesem Band lassen sich stufenlos die gewünschten Ausgleichsmassen für die jeweils in den Ausgleichskomponenten anzubringenden Ausgleichsgewichte abschneiden. Da eine stufenlose Ablängung des jeweils gewünschten Ausgleichsgewichts vom Gewichteband möglich ist, erreicht man eine hohe Auswuchtqualität, wobei die Ausgleichsgewichte an solchen Stellen vorgesehen sind, die durch die durchgehenden Stege bzw. Speichen des Scheibenrades nach außen geschützt sind.

Insbesondere bei solchen Scheibenrädern, die aus Leichtmetall bestehen und welche zwecks Erzielung eines bestimmten Designs Materialunterbrechungen aufweisen, erweist sich die Erfindung von Vorteil.

Anhand der Figuren wird an einem Ausführungsbeispiel die Erfindung noch näher erläutert. Es zeigt:
- Fig. 1:: ein Blockschaltbild für eine Vorrichtung; und
- Fig. 2:: ein Vektordiagramm zur Erläuterung der Arbeitsweise der Vorrichtung in Fig. 1.

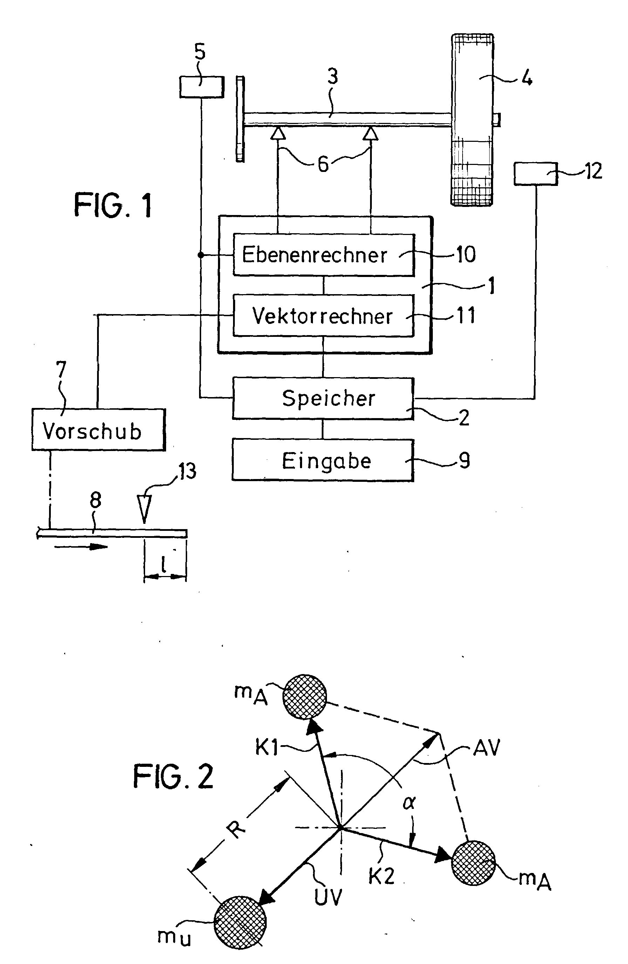

In der Fig. 1 ist schematisch eine Vorrichtung zum Ausgleich einer Unwucht an einem Kraftfahrzeugrad dargestellt, mit welchem die Erfindung verwirklicht werden kann.

Die Vorrichtung besitzt, wie in herkömmlicher Weise in einer Auswuchtmaschine mit Unwuchtmeßeinrichtung vorgesehen, eine Hauptwelle 3, auf welcher ein auszuwuchtendes Kraftfahrzeugrad 4 aufgespannt wird. In kraftschlüssiger Verbindung mit der Hauptwelle 3 befinden sich Kraftmeßeinrichtungen 6 in Form von Kraftmeßwandlern. Mit der Hauptwelle 3 ist ferner eine Winkelmeßeinrichtung 5 in Form eines Winkelinkrementgebers, z.B. einer berührungslos (optisch, elektrisch, magnetisch) abgetasteten Lochscheibe, vorgesehen.

Die Kraftmeßeinrichtung 6 und die Winkelmeßeinrichtung 5 sind mit einem Ebenenrechner 10 in einer Auswerteschaltung 1 verbunden. In Abhängigkeit von den Radabmessungen, insbesondere in Abhängigkeit von den Ausgleichsradien und Ausgleichsebenen, in denen Ausgleichsgewichte für einen Unwuchtausgleich angebracht werden können, berechnet der Ebenenrechner 10 aus den von der Kraftmeßeinrichtung 6 gelieferten Daten, die mit den Winkeldaten der Winkelmeßeinrichtung 5 verknüpft sind, für einen statischen Unwuchtausgleich eine Ausgleichsmasse, die in einer Ausgleichsebene am Kraftfahrzeugrad anzubringen ist. Wenn ein dynamischer Unwuchtausgleich gewünscht ist, ermittelt der Ebenenrechner die Ausgleichsmassen in den beiden Ausgleichsebenen, welche mit den vorgegebenen Ausgleichsradien am Rad befestigt werden.

An den Ebenenrechner 10 ist in der Auswerteschaltung 1 ferner ein Vektorrechner 11 angeschlossen. Der Vektorrechner 11 ist mit einem Speicher 2 verbunden, in welchem Winkelpositionen von radial durchgehenden Radscheibenteilen, welche die Form von Stegen, Speichen und dergl. aufweisen können, bezogen auf die Winkeldaten der Winkelmeßeinrichtung 5, gespeichert sind. Die Winkeldaten für die radial durchgehenden Radscheibenteile können mit Hilfe einer Abtasteinrichtung 12 am auf der Hauptwelle 3 befestigten Kraftfahrzeugrad 4 abgetastet werden, so daß ein gleichbleibender Bezug zu den Daten der Winkelmeßeinrichtung 5 sowohl beim Meßvorgang als auch beim Ausgleichsvorgang erreicht wird.

Der Vektorrechner 11 zerlegt die im Ebenenrechner 10 bestimmte Unwuchtausgleichsgröße (Ausgleichsmasse, Ausgleichswinkellage) in Ausgleichskomponenten in solchen Winkellagen, in denen sich am Kraftfahrzeugrad 4 radial durchgehende Radscheibenteile in Form von Stegen, Speichen und dergl. befinden.

Der Vektorrechner 11 ist mit einer Vorschubeinrichtung 7 verbunden. Die Vorschubeinrichtung 7 dient zum Vorschub eines Gewichtebandes 8, von dem in Abhängigkeit der für die jeweilige Ausgleichskomponente im Vektorrechner 11 bestimmten Ausgleichsmasse ein Ausgleichsgewicht, z.B. mittels einer Schneideinrichtung 13, abgetrennt wird. Das Gewichteband 8 kann beispielsweise, ähnlich wie in der DE-OS 25 22 149 gezeigt, in Form eines durchgehenden Gewichtebandes in Bereitschaft gehalten werden. Von diesem durchgehenden Gewichteband kann stufenlos in Abhängigkeit von der ermittelten Ausgleichsmasse eine bestimmte Länge 1 abgetrennt werden, die der gewünschten Ausgleichsmasse entspricht. Es ist jedoch auch möglich, in vorgegebenen Gewichtsstufen, z.B. wie aus der DE-GM 17 77 597 oder US-PS 2,640,727 bekannt, die Ausgleichsgewichte als Band in Bereitschaft zu halten. Die Gewichtsstufen werden dann bei der Berechnung der Ausgleichskomponenten im Vektorrechner 11 zur Erzielung einer optimalen Auswuchtqualität berücksichtigt.

Es ist auch möglich, eine Tastatur 9 vorzusehen, mit der die Scheibenradtypen, an denen die radial durchgehenden Radscheibenteile festgelegt sind, mit dem Speicher 2 für die Winkelposition der radial durchgehenden Radscheibenteile verbunden sind.

Anhand der Fig. 2 wird die Arbeitsweise der Auswerteeinrichtung 1 im Zusammenhang mit dem Speicher 2 erläutert. Im Ebenenrechner 10 wird aus den Meßergebnissen der Kraftmeßeinrichtung 6 und der Winkelmeßeinrichtung 5 ein Unwuchtvektor UV bestimmt, der ein Maß ist für die Auswirkung einer Unwucht des Kraftfahrzeugrades 4 in einer bestimmten Ausgleichsebene, bezogen auf einen bestimmten Radius. Der Unwuchtvektor entspricht einer Masse mu in einer bestimmten Winkellage auf dem Radius. Diese Unwuchtauswirkung läßt sich durch einen Ausgleichsvektor AV in einer um 180° versetzten Winkellage mit einer der Masse mu entsprechenden Ausgleichsmasse auf einem Ausgleichsradius R ausgleichen. Wenn in der Winkellage des Ausgleichsvektors AV sich ein radial durchgehendes Radscheibenteil befindet, kann an dieser Stelle ein entsprechendes Ausgleichsgewicht eingesetzt werden.

Wenn jedoch an der Stelle des Ausgleichsvektors AV kein radial durchgehendes Radscheibenteil vorhanden ist, zerlegt der Vektorrechner 11 den Ausgleichsvektor AV in zwei Komponenten K1 und K2, die solche Winkellagen haben, in denen radial durchgehende Radscheibenteile vorhanden sind und beispielsweise einen Winkelabstand von α aufweisen. Bezogen auf den vorgegebenen Ausgleichsradius R werden dann entsprechende Ausgleichsmassen mA, welche gleich oder unterschiedlich voneinander sein können, bestimmt. In Abhängigkeit der so bestimmten Ausgleichsmassen mA erfolgt dann die Ablängung der Ausgleichsgewichte vom Gewichteband 8. Hierzu wird die Vorschubeinrichtung 7 entsprechend angesteuert. Bevorzugt kommt eine stufenlose Ablängung zum Einsatz, da dann eine genaue Bemessung der Ausgleichsmassen erreicht wird.

## Patentansprüche

1. Verfahren zum Ausgleich einer Unwucht an einem Kraftfahrzeugrad (4), dessen Scheibenrad im Bereich der Radscheibe Materialunterbrechungen und radial durchgehende Radscheibenteile aufweist, bei dem in Abhängigkeit von während eines Meßvorgangs ermittelten Meßwerten für eine an der Innenseite des Scheibenrades befindliche Ausgleichsebene mit zugeordnetem Ausgleichsradius eine Ausgleichsgröße (AV) nach Winkellage und Ausgleichsmasse für den mit Klebegewichten durchgeführten Unwuchtausgleich bestimmt wird,
dadurch **gekennzeichnet,**
daß die Winkellagen der Materialunterbrechungen und/oder der radial durchgehenden Radscheibenteile gespeichert werden, daß die in der in der Innenseite des Scheibenrades befindliche Ausgleichsebene bestimmte Ausgleichsgröße dann in zwei Ausgleichsmassen (mA) in solchen Winkellagen, in denen radial durchgehende Radscheibenteile vorhanden sind, zerlegt wird, wenn die Winkellage der bestimmten Ausgleichsgröße außerhalb radial durchgehender Radscheibenteile liegt, und daß den beiden zerlegten Ausgleichsmassen entsprechende Ausgleichsgewichte in den zugeordneten Winkellagen in der Ausgleichsebene an der Innenseite des Scheibenrades befestigt werden.

2. Verfahren nach Anspruch 1, dadurch gekennzeichnet, daß die Ausgleichsgewichte in bestimmten Gewichtsstufen, die für die Zerlegung gespeichert sind, in Bereitschaft gehalten werden.

3. Verfahren nach Anspruch 1, dadurch gekennzeichnet, daß die Ausgleichsgewichte in Form eines durchgehenden Gewichtebandes von dem eine der jeweiligen Ausgleichsmasse entsprechende Länge als Ausgleichsgewicht abgetrennt wird.

4. Verfahren nach Anspruch 3, dadurch gekennzeichnet, daß das Gewichteband in Form einer Rolle in Bereitschaft gehalten wird und das Gewichteband in Abhängigkeit von der jeweilig zerlegten Masse mit einem bestimmten Vorschub für den Trennvorgang bewegt wird.

5. Vorrichtung zur Durchführung eines Verfahrens nach Patentanspruch 1 mit einer Hauptwelle (3), auf welcher das Kraftfahrzeugrad (4) aufgespannt ist, einer kraftschlüssig mit der Hauptwelle verbundenen Kraftmeßeinrichtung (6), einer mit der Hauptwelle gekoppelten Drehwinkelmeßeinrichtung (5), einer an die Winkel- und Kraftmeßeinrichtung angeschlossenen Auswerteeinrichtung (1) zur Bestimmung der Ausgleichsmassen und Winkellagen für den Unwuchtausgleich mittels Klebegewichten einer Ausgleichsebene an der Innenseite des Scheibenrades,
dadurch **gekennzeichnet,**
daß die Auswerteeinrichtung (1) an einen Speicher (2) angeschlossen ist, in welchem die Winkellagen der radial durchgehenden Radscheibenteile des an der Hauptwelle (3) befestigten Kraftfahrzeugrades (4) gespeichert sind und daß die Auswerteeinrichtung (1) einen Vektorrechner aufweist, der die von der Winkel- und Kraftmeßeinrichtung (5, 6) gelieferten Meßwerte in Ausgleichsmassen zerlegt, die in den Winkellagen der radial durchgehenden Radscheibenteile liegen.

6. Vorrichtung nach Anspruch 5, dadurch gekennzeichnet, daß die Auswerteeinrichtung (1) mit einer Vorschubeinrichtung (7) für ein durchgehendes Gewichteband (8) verbunden ist und daß das Gewichteband (8) in Abhängigkeit von der für die jeweilige Ausgleichskomponente berechneten Ausgleichsmasse für eine stufenlose Ablängung des Ausgleichsgewichts mit einem bestimmten Vorschub bewegt ist.

## Claims

1. A method of compensating for unbalance on a motor vehicle wheel (4) whose disc wheel in the region of the wheel disc has material interruptions and radially continuous wheel disc portions, wherein in dependence on measurement values which are ascertained during a measuring operation, for a compensating plane at the inside of the disc wheel with associated compensating radius, a compensating value (AV) is determined in accordance with angular position and compensating mass for unbalance compensation which is effected with adhesive weights, characterised in that the angular positions of the material interruptions and/or the radially continuous wheel disc portions are stored, the compensating value which is determined in the compensating plane in the inside of the disc wheel is then resolved into two compensating masses (mA) in such angular positions in which there are radially continuous wheel disc portions if the angular position of the given compensating value is outside radially continuous wheel disc portions, and that compensating weights corresponding to the two resolved compensating masses are fixed to the inside of the disc wheel in the associated angular positions in the compensating plane.

2. A method according to claim 1 characterised in that the compensating weights are kept in readiness in given weight stages which are stored for the resolution operation.

3. A method according to claim 1 characterised in that the compensating weights are in the form of a continuous weight strip from which a length corresponding to the respective compensating mass is separated as a compensating weight.

4. A method according to claim 3 characterised in that the weight strip is kept in readiness in the form of a roll and the weight strip is moved with a given forward feed movement for the separation operation in dependence on the respectively resolved mass.

5. Apparatus for carrying out a method according to claim 1 comprising a main shaft (3) on which the motor vehicle wheel (4) is clamped, a force measuring device (6) which is force-lockingly connected to the main shaft, a rotary angle measuring device (5) which is coupled to the main shaft, an evaluation device (1) connected to the angle and force measuring devices for determining the compensating masses and angular positions for unbalance compensation by means of adhesive weights in a compensating plane at the inside of the disc wheel, characterised in that the evaluation device (1) is connected to a storage means (2) in which the angular positions of the radially continuous wheel disc portions of the motor vehicle wheel (4) fixed to the main shaft (3) are stored and that the evaluation device (1) has a vector computing means which resolves the measurement values supplied by the angle and force measuring devices (5, 6) into compensating masses which are in the angular positions of the radially continuous wheel disc portions.

6. Apparatus according to claim 5 characterised in that the evaluation device (1) is connected to a feed device (7) for a continuous weight strip (8) and that the weight strip (8) is moved with a given forward feed movement in dependence on the compensating mass which is calculated for the respective compensation component, for steplessly cutting the compensating weight to length.

## Revendications

1. Procédé de compensation du balourd d'une roue (4) de véhicule automobile, dont la roue à disque comporte dans la région du disque de roue des interruptions de matière et des parties de disque de roue continues radialement, dans lequel on détermine, en fonction de valeurs de mesure obtenues pendant un procédé de mesure pour un plan de compensation se trouvant sur le côté intérieur de la roue de disque et ayant des rayons de compensation associés, une grandeur (AV) de compensation en fonction de la position angulaire et du poids de compensation pour la compensation de balourd réalisé avec des masselottes de collage
caractérisé en ce que,
on mémorise les positions angulaires relatives des interruptions de matériaux et/ou des parties de disque de roue radialement continues, on décompose ensuite la grandeur de compensation déterminée dans le plan de compensation se trouvant du côté intérieur de la roue de disque en deux poids (mA) de compensation en des positions angulaires telles qu'il y ait des parties de disque de roue radialement continues lorsque la position angulaire de grandeur de compensation déterminée se trouve à l'extérieur de parties de disque de roue radialement continues et on fixe des masselottes de compensation, correspondant aux deux poids de compensation décomposés en les positions angulaires associées, dans le plan de compensation du côté intérieur de la roue de disque.

2. Procédé suivant la revendication 1,
caractérisé en ce que les masselottes de compensation sont maintenues en réserve dans des étages de masselotte, qui sont mémorisées pour la décomposition.

3. Procédé suivant la revendication 1,
caractérisé en ce que les masselottes de compensation qui sont sous la forme d'une bande de masselotte continue sont découpées en tant que masselottes de compensation d'une longueur correspondant aux poids de compensation respectifs.

4. Procédé suivant la revendication 3,
caractérisé en ce que la bande de masselottes est maintenue en réserve sous forme d'un rouleau et la bande de masselottes est déplacée pour le procédé de découpe d'un avancement déterminé en fonction des poids décomposés respectifs.

5. Dispositif pour la mise en oeuvre d'un procédé suivant la revendication 1, comportant un arbre (3) principal, sur lequel est montée la roue (4) de véhicule automobile, un dispositif (6) de mesure de force relié positivement à l'arbre principal, un dispositif (5) de mesure d'angle de rotation couplé à l'arbre principal, un dispositif (1) d'exploitation relié au dispositif de mesure de force et de mesure d'angle destiné à déterminer les poids de compensation et les positions angulaires pour la compensation de balourd au moyen de masselottes de collage d'un plan de compensation du côté intérieur de la roue de disque, caractérisé en ce que le dispositif (1) d'exploitation est relié à une mémoire (2), dans laquelle les positions angulaires des parties de disque de roue radialement continues de la roue (4) de véhicule automobile fixée à l'arbre (3) principal sont mémorisées et en ce que le dispositif (1) d'exploitation comporte un calculateur de vecteurs, qui décompose les valeurs de mesure fournies par les dispositifs (5, 6) de mesure de force et d'angle en des poids de compensation, qui se trouvent en les positions angulaires des parties de disque de roue radialement continues.

6. Dispositif suivant la revendication 5,
caractérisé en ce que le dispositif (1) d'exploitation est relié à un dispositif (7) d'avancée pour une bande (8) de masselotte continue et en ce que la bande (8) de masselotte est déplacée d'un avancement déterminé, en fonction du poids de compensation calculé pour les composantes de compensation respectives pour un tronçonnage continu de la masselotte de compensation.
